Europäisches Patentamt

European Patent Office

Office européen des brevets

(19)

(11) **EP 0 821 314 A2**

(12) **EUROPÄISCHE PATENTANMELDUNG**

(43) Veröffentlichungstag:
28.01.1998 Patentblatt 1998/05

(51) Int. Cl.⁶: $G06F\ 17/25$

(21) Anmeldenummer: 97109893.4

(22) Anmeldetag: 18.06.1997

(84) Benannte Vertragsstaaten:
AT BE CH DE DK ES FI FR GB GR IE IT LI LU MC NL PT SE
Benannte Erstreckungsstaaten:
AL LT LV RO SI

(30) Priorität: 05.07.1996 GB 9614145

(71) Anmelder: ESSELTE N.V.
9100 St. Niklaas (BE)

(72) Erfinder:
• Gutsell, S. Graham
20 The Limes, Cambs CB2 5QT (GB)
• Hastings, J. Nicholas
Cottenham, Cambridge CB4 4UL (GB)
• George, M. Ian
Cambridge CB1 3JH (GB)

• Edwards, Ch. Martin
West Ratting, Cambridge CB1 5LY (GB)

(74) Vertreter: Franzen, Peter
Esselte Meto International GmbH,
Patent Department,
Westerwaldstrasse 3-13
64646 Heppenheim (DE)

Bemerkungen:
Ein Antrag gemäss Regel 88 EPÜ auf Umnumerierung der Patentansprüche liegt vor. Über diesen Antrag wird im Laufe des Verfahrens von der Prüfungsabteilung eine Entscheidung getroffen werden (Richtlinien für die Prüfung im EPA, A-V, 3.).

(54) **Banddruckgerät zum Drucken von Rahmen mit unterschiedlichen Formen**

(57) Die Erfindung bezieht sich auf ein Druckgerät (1) zum Bedrucken eines Bandes (14), mit Mitteln zum Eingeben von auszudruckenden Schriftzeichen in einen Puffer (43), Mitteln (4) zum Auswählen eines Typs eines Rahmens, der um wenigstens einen Teil der Schriftzeichen herum ausdruckbar ist, wobei die unterschiedlichen Typen der Rahmen verschiedene Formen aufweisen, einer Druckeinrichtung zum Bedrucken des Bandes (14) mit den Schriftzeichen und mit einem ausgewählten Rahmen, und einer Steuerungseinrichtung (44) zum Steuern der Druckeinrichtung. Um möglichst wenig Speicherplatz für die verschiedenen Rahmen zu verbrauchen, wird vorgeschlagen, daß das Druckgerät einen Programmspeicher (41) aufweist, in dem Programme abgespeichert sind, daß die Steuerungseinrichtung (44) zum Abrufen von Programmen aus dem Programmspeicher (41) eingerichtet ist, daß die Programme zur Bereitstellung von Daten zur Steuerung der Druckeinrichtung zum Drucken zumindest von Teilen der Rahmen eingerichtet sind, und daß die Steuerungseinrichtung (44) entsprechend dem jeweils ausgewählten Rahmen unterschiedliche Programme aus dem Programmspeicher (41) aufruft.

Fig. 5

Printed by Xerox (UK) Business Services
2.15.8/3.4

EP 0 821 314 A2

## Beschreibung

Die Erfindung bezieht sich auf ein Druckgerät gemäß dem Oberbegriff des Anspruchs 1.

Ein Banddruckgerät gattungsgemäßer Art ist aus der EP-A-0 639 813 bekannt geworden. Es ist zum Drucken eines Rahmens mit einer komplizierten Form um mittels einer Tastatur oder anderer Einrichtungen eingegebener Schriftzeichen herum eingerichtet. In einem Rahmenspeicher sind Rahmendaten, die eine Vielzahl von Rahmenlinien repräsentieren, punktweise abgespeichert. Den eingegebenen Schriftzeichen entsprechende Dokumentdaten werden zusammen mit den Rahmendaten in einem Druckpuffer gespeichert und zum Drucken einem Druckkopf zugeführt. Verschiedene Typen von Rahmenlinien können ausgewählt und kombiniert werden, um eine gewünschte Umrahmung der eingegebenen Schriftzeichen zu erzielen.

Als nachteilig ist dabei anzusehen, daß es notwendig ist, eine Vielzahl von Rahmenformen abzuspeichern, da die punktweise Speicherung einen beträchtlichen Betrag an wertvoller Speicherkapazität erfordert.

Die Aufgabe der vorliegenden Erfindung besteht darin, ein Banddruckgerät bereitzustellen, das in der Lage ist, eingegebene Dokumente mit einer großen Vielzahl von Rahmenlinien zu umrahmen, wobei nur wenig Speicherplatz für die Rahmenlinien erforderlich sein soll.

Diese Aufgabe wird gemäß der Erfindung durch die Lehre des Anspruchs 1 gelöst.

Es werden verschiedene, unterschiedliche Programme in einem Programmspeichermittel abgelegt, die entsprechend dem jeweils ausgewählten Typ des Rahmens aufgerufen werden. Die Druckeinrichtung wird durch die aufgerufenen Programme derart gesteuert, daß die gewünschten Rahmen gedruckt werden. Es ist anzumerken, daß die Programme auch zur Bereitstellung von Daten zu Anzeigezwecken genutzt werden können, obwohl es denkbar ist, (in der Regel vereinfachte) den Rahmen entsprechende Punktemuster zur Steuerung einer Anzeige zu benutzen.

Ein wesentlicher Vorteil der Erfindung ist, daß der Betrag der zum Abspeichern der unterschiedlichen Typen der Rahmen benötigten Speicherkapazität vermindert ist, da die beim Drucken verwendeten, speicherplatzintensiven Punktemuster nur während des Druckens für den jeweils ausgedruckten Teil des ausgewählten Rahmens benötigt werden, während die gespeicherten Programme, die als Funktionen implementierbar sind, nur wenig Speicherplatz einnehmen.

Der Druckprozeß ist gewöhnlich in aufeinanderfolgende Druckzyklen unterteilt. In jedem Druckzyklus wird eine Reihe von Pixeln mittels eines Druckkopfs auf das Band gedruckt, und das Band wird zum Drucken der aufeinanderfolgenden Zeilen relativ zum Druckkopf bewegt. Wenn ein komplizierter Teil eines Rahmens auszudrucken ist, können die gespeicherten Programme zum Feststellen, welche der Druckelemente des Druckkopfs während jedes einzelnen Druckzyklus zu aktivieren sind, verwendet werden.

In der Regel hat nur die linke und rechte (dh. der vordere und hintere) Berandung des Rahmens eine komplizierte Form, während der mittlere Teil oberhalb und unterhalb der einrahmten Schriftzeichen verhältnismäßig einfach, da geradlinig ist. Die linken und rechten Berandungen des Rahmens können sich außerdem aus Abschnitten mit geraden und kurvenförmigen Umrissen zusammensetzen.

Die Programme können verwendet werden, um die Schnittpunkte zwischen den geraden und/oder kurvenförmigen Teilen der Umrisse der Berandungen der Rahmen und den jeweiligen Druckkopfzeilen festzustellen, wenn die komplizierten Teile der Rahmen gedruckt werden. Das heißt, daß für jede Druckkopfzeile die Programme zur Feststellung der Schnittpunkte der Umrisse der Berandungen mit der Druckzeile an der jeweiligen Druckkopfposition aufgerufen werden. Die Druckkopfelemente zwischen zwei zusammengehörenden Schnittpunkten werden dann entsprechend aktiviert.

Um den Speicherplatz der Programme zum Drucken der Rahmen zu vermindern, ist vorgeschlagen, unterschiedliche Unterprogramme zu verwenden, die sukzessive mit unterschiedlichen Parametern aufgerufen werden. Es können verschiedene Unterprogramme benutzt werden, von denen eines zur Herstellung von Daten zum Drucken gerader Linien, und eines zur Herstellung von Daten zum Drucken gekrümmter Linien geeignet ist. Dabei werden die Unterprogramme zum Drucken gerader Linien mit Parametern aufgerufen, die den Anfangs- und Endpunkten der geraden Linien entsprechen. Die Unterprogramme zum Drucken gekrümmter Linien werden analog mit Parametern aufgerufen, die den Anfangs- und Endpunkten entsprechen, sowie mit einem Offset, der den Krümmungsgrad der Kurve repräsentiert.

In den meisten Banddruckgeräten können Bänder verschiedener Breite benutzt werden. Es ist entsprechend sinnvoll, die Höhe der Rahmen (dh. die Entfernung zwischen dem obersten und untersten Pixel des mittleren Teils oberhalb und unterhalb der zwischen den komplizierten Berandungen gedruckten Schriftzeichen) bezüglich der Breite des Bandes zu skalieren. Die Breite des Bandes kann vom Benutzer eingegeben oder selbsttätig durch das Druckgerät festgestellt werden. Es ist anzumerken, daß es weiterhin möglich ist, die Länge der komplizierten Teile der Rahmen in Richtung der Länge des Bandes entsprechend der Breite des Bandes zu skalieren.

Weiterhin ist wünschenswert, die Dicke des Rahmens zu variieren. Das kann entsprechend einem benutzereingegebenen Wert oder selbsttätig, vorzugsweise entsprechend der Breite des Bandes, durchgeführt werden. Je breiter das Band ist, um so dicker sind die Rahmen auszudrucken.

In einer Ausführungsform der Erfindung erfolgt die Änderung der Dicke der komplizierten Teile des Rahmens, dh. der linken und rechten Berandungen, mittels der bereits beschriebenen Schnittpunkte zwischen den geraden und/oder kurvenförmigen Teilen der Umrisse der Abschnitte und der jeweiligen Druckzeile. Diese Schnittpunkte werden in einem ersten Schritt festgestellt und in einem zweiten Schritt aufwärts bzw. abwärts (dh. entlang der Reihe der Druckelemente des Druckkopfs) entsprechend der benötigten Dicke verschoben. Für einen dickeren Rahmen werden die Schnittpunkte weiter als für einen dünneren Rahmen verschoben. Die Dicke der Rahmen wird damit entsprechend skaliert.

Alternativ wäre es denkbar, unterschiedliche Programme für die verschiedenen Dicken zu speichern und aufzurufen. Das bedeutet, daß unterschiedliche Programme zum Drucken von Rahmen desselben Typs (dh. Aussehens) benutzt werden, die jedoch ein Ausdrucken der Rahmen mit unterschiedlicher Dicke erlauben.

Eine andere Möglichkeit ist, von den Koordinaten der Umrisse (dh. der Geraden und Kurven), die zur Definition der komplizierten Teile der Rahmen dienen, zu den unterschiedlichen Dicken der Rahmen proportionale Beträge zu addieren oder zu subtrahieren. Das bedeutet, daß die die komplizierten Teile der Rahmen produzierenden (Unter-) Programme mit einem die Dicke des Rahmens wiedergebenden Parameter aufgerufen werden, wie später besprochen. Mit anderen Worten, werden die die Rahmen definierenden Umrisse entsprechend der gewünschten Dicke verschoben.

Es ist zu erwähnen, daß die geraden Teile des Rahmens, die im Mittelteil angeordnet sind und die komplizierten Berandungen an der linken und rechten Seite verbinden, mit einer der Dicke der Berandungen entsprechenden Dicke versehen werden.

Weiterhin ist die rechte Berandung des Rahmens häufig ein Spiegelbild der linken Berandung des Rahmens. Um Programmplatz zu sparen, wird vorgeschlagen, diee Symmetrie zum Drucken beider Berandungen auszunutzen. Ein anderer Parameter der die komplizierten Teile der Rahmen produzierenden Programme ist dann ein Flag, das Information darüber gibt, ob die Berandung gespiegelt oder normal zu drucken ist, dh. ob das linke oder rechte Ende des Rahmens zu drucken ist. Das Verfahren zum Drucken gespiegelter Berandungen ist dasselbe wie das zum Drucken von Schriftzeichen als Spiegelbild, wie es z.B. in der US 4568951 A beschrieben ist, deren Inhalt durch Verweis hierin inkorporiert wird. Die Schnittpunkte zwischen der jeweiligen Druckkopfzeile und den Umrissen der komplizierten Teile der Rahmen werden von rechts nach links durchrastert (dh. in der umgekehrten Reihenfolge), wenn der gespiegelte Teil zu drucken ist. Mit anderen Worten, werden in diesem Fall die Koordinaten der Umrisse in der horizontalen Richtung einfach invertiert.

Im folgenden werden Ausführungsformen der Erfindung anhand der Zeichnungen näher erläutert. Sie zeigen in schematischer Darstellung in

Figur 1 eine Ansicht der Vorderseite eines Banddruckgeräts,
Figur 2 eine Ansicht der Unterseite eines Banddruckgeräts,
Figur 3 ein vereinfachtes Blockdiagramm einer Steuerschaltung zur Steuerung des Banddruckgeräts in Figur 1,
Figur 4 zeigt mit dem Banddruckgerät herstellbare Rahmen,
Figur 5 illustriert, wie die Rahmen gedruckt werden,
Figur 6 ist ein vereinfachtes Blockdiagramm, das offenbart, wie Rahmen und Unterstreichungen mit unterschiedlicher Dicke gedruckt werden;
Figur 7 ist ein vereinfachtes Blockdiagramm der Funktion des Banddruckgeräts;
Figur 8 ist ein vereinfachtes Blockdiagramm, das zeigt, wie die linke Berandung eines Rahmens mit komplizierten Teilen gedruckt wird;
Figur 9 ist ein vereinfachtes Blockdiagramm, das zeigt, wie der mittlere Teil eines Rahmens mit komplizierten Teilen gedruckt wird;
Figur 10 ist ein vereinfachtes Blockdiagramm, das zeigt, wie die rechte Berandung eines Rahmens mit komplizierten Teilen gedruckt wird;
Figur 11 ist ein vereinfachtes Blockdiagramm, das darstellt, wie der Typ und die Breite eines Rahmens ausgewählt wird;
Figur 12 zeigt die Anzeige des Banddruckgeräts im Layout-Menu; und
Figur 13 ist ein vereinfachtes Blockdiagramm, das das Verfahren der Erzeugung einer Druckzeile eines komplizierten Teils eines Rahmens darstellt.

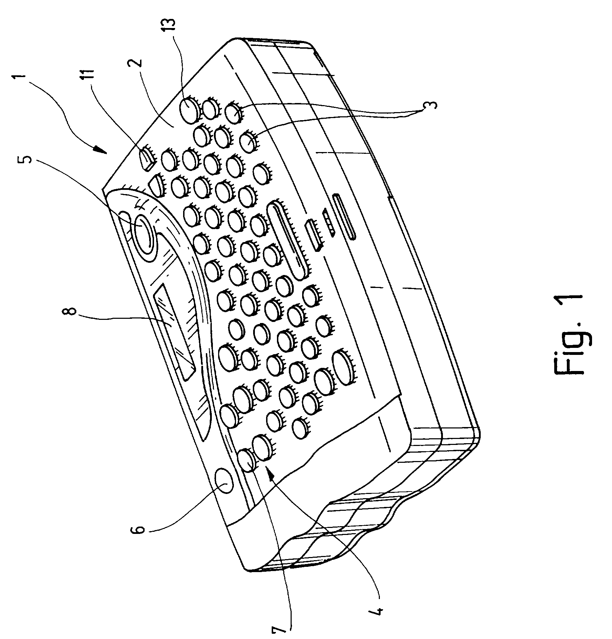

Figur 1 zeigt eine vereinfachte Ansicht eines Banddruckgeräts 1. Das Banddruckgerät 1 umfaßt eine Tastatur 2. Die Tastatur 2 hat eine Vielzahl von Dateneingabetasten und umfaßt im speziellen eine Vielzahl numerierter Tasten, Buchstabentasten und Punktierungstasten 3 zum Eingeben von Daten, die als Etikett auszudrucken sind, und Funktionstasten 4 zum Editieren der eingegebenen Daten. Diese Funktionstasten 4 sind beispielsweise zum Ändern der Größe oder des Fonts der eingegebenen Daten eingerichtet. Zusätzlich erlauben diese Funktionstasten auch, neben anderen Funktionen, Unterstreichung und Einrahmung eines Etiketts zu bewirken. Die Tastatur 2 umfaßt außerdem eine Druck-Taste 5, die betätigt wird, wenn beabsichtigt ist, ein Etikett auszudrucken. Zusätzlich hat die Tastatur 2 eine Ein/Aus-Taste 6 zum Ein- und Ausschalten des Banddruckgeräts.

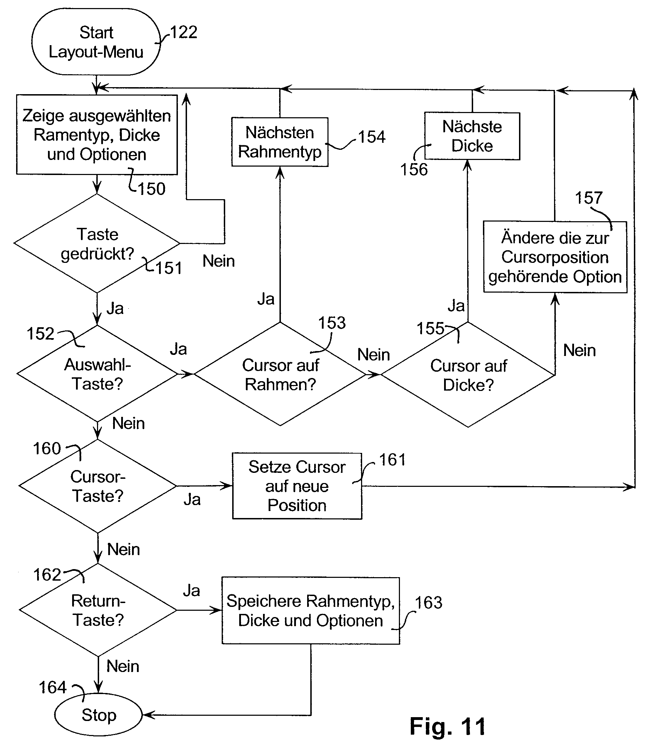

Eine Auswahl-Taste 7 wird später mit Bezug zur Figur 11 näher erläutert. Ein Cursor kann mittels Cursor-Tasten 11 über eine Anzeige 8 bewegt werden. Eine Return-Taste ist durch das Bezugszeichen 13 gekennzeichnet.

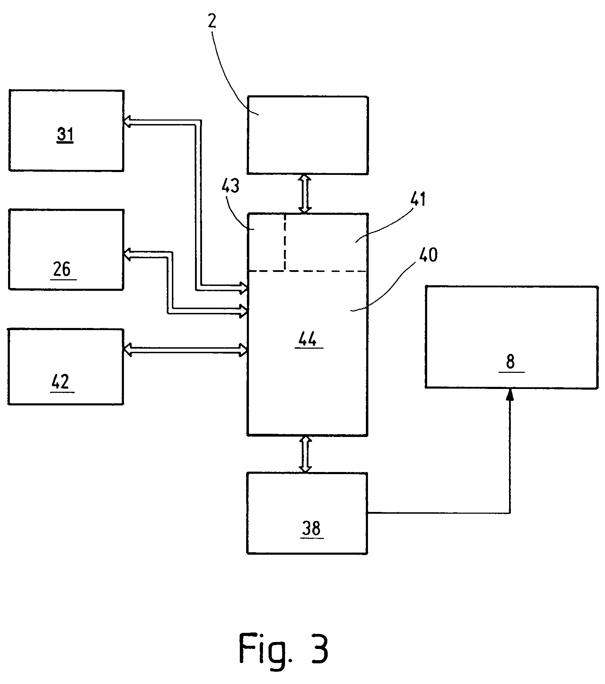

Das Banddruckgerät 1 hat eine Flüssigkristallanzeige (LCD) 8, die die eingegebenen Daten anzeigt. Die Anzeige 8 erlaubt dem Benutzer, das gesamte auszudruckende Etikett oder einen Teil davon zu sehen, was das Editieren des Etiketts vor dem Ausdrucken erleichtert. Zusätzlich kann die Anzeige 8 dem Benutzer auch Botschaften anzeigen, wie beispielsweise Fehlermeldungen oder einen Hinweis, daß die Druck-Taste 5 gedrückt wurde. Die Anzeige wird durch einen Displaytreiber 38 getrieben, der in Figur 3 erkennbar ist.

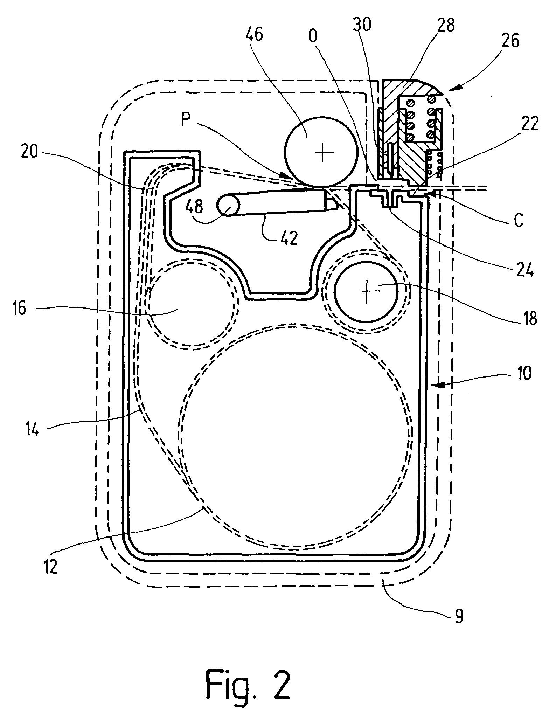

An der in Figur 2 gezeigten Unterseite des Banddruckgeräts 1 befindet sich ein Kassettenaufnahmeraum. Der Kassettenaufnahmeraum umfaßt einen Thermodruckkopf 42 und eine Druckwalze 46, die zur Definition einer Druckzone P zusammenwirken. Der Druckkopf ist um einen Schwenkpunkt 48 schwenkbar gelagert, so daß er in und außer Kontakt mit der Druckwalze 46 gebracht werden kann, um eine Kassette entnehmen und austauschen zu können. Eine in den Kassettenaufnahmeraum eingestzte Kassette wird allgemein mit dem Bezugszeichen 10 gekennzeichnet. Die Kassette 10 enthält eine Vorratsspule 12 mit Bildempfangsband 14. Das Bildempfangsband 14 umfaßt eine obere Schicht zum Aufnehmen eines gedruckten Bildes auf einer seiner Oberflächen und ist auf seiner gegenüberliegenden Oberfläche mit einer adhäsiven Schicht ausgestattet, auf der eine abziehbare Rückseitenschicht aufgebracht ist. Das Bildempfangsband 14 wird durch einen (nicht gezeigten) Führungsmechanismus durch die Kassette 10, aus der Kassette 10 hinaus durch einen Auslaß C, und entlang der Druckzone P zu einem Schneideort C geführt. Dieselbe Kassette 10 enthält auch eine eine Tintenfarbbandvorratspule 16 und eine Tintenfarbbandaufwickelspule 18. Das Bildempfangsband 14 und das Tintenfarbband 20 sind so angeordnet, daß sie in Überlappung zwischen dem Druckkopf 42 und der Druckwalze 46 hindurchlaufen. Die Bildempfangsschicht des Bildempfangsbandes 14 ist insbesondere im Kontakt mit dem Tintenfarbband 20.

Die Druckwalze 46 wird durch einen Motor 31 (siehe Figur 3) angetrieben, beispielsweise ein Gleichstrommotor oder ein Schrittmotor, so daß sie sich dreht zum Antreiben des Bildempfangsbandes 14 in eine parallel zur Längsrichtung des Bildempfangsbandes 14 verlaufende Richtung durch die Druckzone P. Auf diese Art wird ein Bild auf das Bildempfangsband 14 gedruckt und ds Bildempfangsband wird von der Druckzone P zum Schneideort C geführt, der an einer Stelle an einem Abschnitt der Wand der Kassette 10 nahe der Druckzone P vorgesehen ist. Der Abschnitt der Wand der Kassette 10, an dem der Schneideort definiert ist, wird durch das Bezugszeichen 22 gekennzeichnet. Ein Schlitz 24 ist im Wandabschnitt definiert, und das Bildempfangsband wird durch die Druckzone P zum Schneideort C geführt, wo es durch gegenüberliegende Wandabschnitte auf beiden Seiten des Schlitzes 24 abgestützt.

Ein Schneidemechanismus 26 ist bereitgestellt und umfaßt ein Schneidenträgerelement 28, das eine Klinge 30 trägt. Die Klinge 30 schneidet das Bildempfangsband 24 durch und tritt in den Schlitz 24 ein.

In den Ausführungsformen, in denen der Motor 31 ein Gleichstrommotor ist, wird das Bildempfangsband 14 kontinuierlich während des Druckens durch die Druckzone geführt. Alternativ dreht sich die Druckwalze 46 in den Ausführungsformen, in denen der Motor 31 ein Schrittmotor ist, schrittweise, um das Bildempfangsband während des Druckens durch die Druckzone P zu fahren.

Der Druckkopf 42 ist ein Thermodruckkopf, der eine Reihe mit einer Vielzahl von Druckelementen umfaßt. Der Druckkopf 42 ist vorzugsweise nur ein Druckelement breit und die Reihe erstreckt sich in einer senkrecht zur Längsausdehnung des Bildempfangsbandes 14 verlaufenden Richtung. Die Höhe der Reihe der Druckelemente ist vorzugsweise gleich der Breite des Bildempfangsbandes 14 zur Verwendung in dem Banddruckgerät 1. Wenn mehr als eine Breite des Bildempfangsbandes 14 verwendet wird, wird die Druckkopfreihe im allgemeinen eine der größten Breite des Bandes 14 entsprechende Höhe haben. Ein Bild wird Reihe für Reihe durch den Druckkopf 42 auf das Bildempfangsband 14 gedruckt. Es ist zu erwähnen, daß ein Bild durch das Tintenfarbband 20 auf das Bildempfangsband gedruckt werden kann. Alternativ kann ein Bild auch direkt durch den Thermodruckkopf 42 auf das Bildempfangsband 14 gedruckt werden, ohne ein Farbband 20 zu verwenden, wenn das Bildempfangsband aus einem geeigneten, thermisch empfindlichen Material ist.

Als Alternative zu dem in Figur 2 gezeigten Ein-Kassetten-System kann der Kassettenaufnahmeraum auch zur Aufnahme einer getrennten Bildempfangsbandkassette und einer separaten Tintenfarbbandkassette eingerichtet sein, die so angeordnet sind, daß das Tintenfarbband und das Bildempfangsband in Überlappung durch die Druckzone geführt werden. Diese besondere Kassettenanordnung wird zum Beispiel in unserer EP-A-0 578 372 beschrieben, deren Inhalt durch Verweis hierin inkorporiert wird. Jede andere geeignete Anordnung zur Bereitstellung eines Vorrates an Bildempfangsband 14 kann selbstverständlich mit Ausführungsformen der vorliegenden Erfindung benutzt werden.

Figur 3 zeigt die grundlegende Steuerschaltung zur Steuerung des Banddruckgeräts der Figuren 1 und 2. Sie enthält einen Mikroprozessorchip 40 mit einem Nur-Lese-Speicher (ROM) 41, eienm Mikroprozessor 44 und und frei zugänglicher Speicherkapazität, die durch das RAM 43 wiedergegeben ist. Der Mikroprozesor wird durch im ROM abgespeicherte Programme gesteuert und wird dann als Steuerung (Controller) benutzt. Der Mikroprozessorchip 40 ist zum Empfang von Etikettendaten eingerichtet, die ihm mittels der Tastatur 2 eingegeben werden. Der Mikroprozessorchip 40 gibt Daten zum Treiben der Anzeige 8 über einen Anzeigentreiberchip 38 aus, um ein auszudruckendes Etikett (oder einen Teil davon) und/oder Botschaften oder Anweisungen an den Benutzer anzuzeigen. Zusätzlich gibt der Mikroprozessorchip 40 auch Daten zum Treiben des Druckkopfs 42 aus, der ein Bild auf das Bildempfangsband 14 zur Erstellung eines Etiketts ausdruckt. Schließlich steuert der Mikroprozessorchip 40 auch den Motor 30 zum Treiben des Bildempfangsbandes 14 durch das Druckgerät 1. Der Mikroprozessorchip 40 kann auch den Schneidemechanismus 26 steuern, um Abschnitte des Bildempfangsbandes 14 abzuschneiden, nachdem ein Bild darauf gedruckt wurde.

Das Banddruckgerät 1 erlaubt das Aufsetzen von Etiketten und ihr Anzeigen auf der Anzeige 8 unter Verwendung der vielen Tasten. Insbesondere speichert das ROM 41 sich auf alphanumerische Schriftzeichen und dergleichen beziehende Informationen, die jeweils bestimmten Tasten 3 zugeordnet sind, sowie den Funktionstasten 4 zugeordnete Funktionen. Wenn eine Taste 3 gedrückt wird, werden dem zugeordneten Schriftzeichen oder dergleichen zugeordnete Daten aus dem ROM geholt und dann im RAM 43 gespeichert. Die im RAM 43 gespeicherten Daten sind in der Form eines das Schriftzeichen identifizierendes Kodes. Der Mikroprozessor 44 erzeugt entsprechend den im RAM gespeicherten Daten Pixeldaten, die auf einer reihenweisen Basis zum Druckkopf 42 und in anderer Form zur Anzeige 8 übertragen werden. Zuätzlich können eine Funktion betreffende Daten aus dem ROM 41 entnommen werden in Folge einer Aktivierung einer oder mehrerer Funktionstasten 4. Die Daten können die Form eines Flags annehmen. Die Pixeldaten werden vom Mikroprozessor erzeugt und zum Druckkopf 42 gesandt; und die Anzeige 8 wird die zu einer oder mehreren im ROM gespeicherten Daten in Betracht ziehen. Es ist zu bemerken, daß die Tasten 3 und 4 der Tastatur zugeordnete, vorbestimmte Funktionen haben, die bedingen, daß der Funktion zugeordnete Daten aus dem ROM entnommen werden.

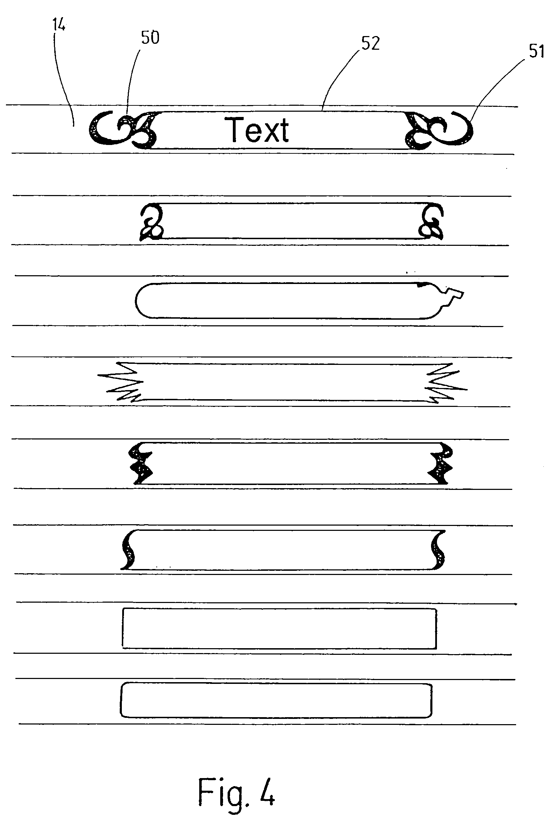

Figur 4 zeigt unterschiedliche Stile von Rahmen, die vom Banddruckgerät 1 bereitgestellt werden. Sie bestehen aus einer linken Berandung 50, die komplizierter sein kann, einem Mittelteil 52, und einer rechten Berandung 51, die ebenfalls komplizierter sein kann. Schriftzeichen werden innerhalb des Mittelteils 52 zwischen den horizontalen, geraden Linien gedruckt, die oberhalb und unterhalb der Schriftzeichen angeordnet sind, wobei letztere in der Zeichnung nur im obersten Etikett wiedergegeben sind (die Aufschrift lautet: „Text"). Die letzten zwei Rahmen in Figur 4 sind einfacher. Der vorletzte ist ein einfaches Rechteck, während der letzte ein Rechteck mit abgerundeten Ecken ist. Es ist anzumerken, daß auch Schriftzeichen außerhalb der Rahmen druckbar sind.

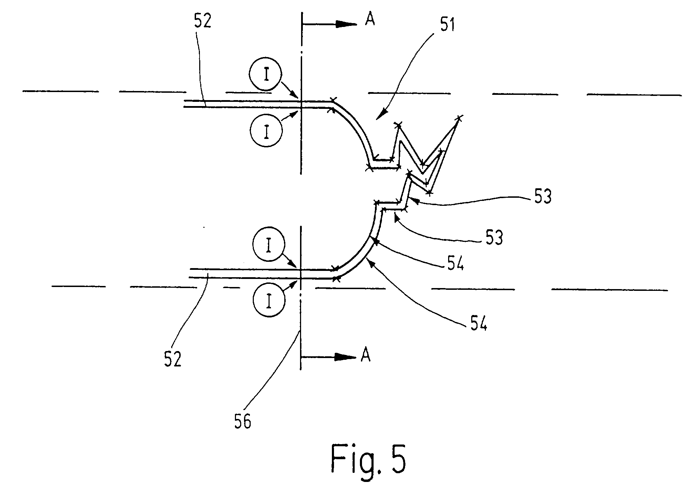

In Figur 5 ist das Verfahren zur Herstellung der Daten zur Steuerung des Druckkopfes 42 beim Drucken der komplizierten Berandungen der Rahmen dargestellt. Die Umrisslinien der komplizierten linken und rechten Berandungen 50,51 der Rahmen sind in eine Reihe gerader Linien 53 und Kurven 54 aufgeteilt, die die äußere Umrandung der zum Drucken der komplizierten Berandungen 50,51 der Rahmen verwendeten Linien beschreiben. Die Kurven 54 sind in Bezier-Form, dh. durch den Anfangs- und Endpunkt und einen Offset definiert, der die Krümmung festlegt. Die Geraden 53,54 sind durch Start- und Endpunkte definiert. In Figur 5 werden die Enden der Geraden und Kurven durch kleine Kreuze angedeutet. Die Geraden werden durch Koordinaten einer (x,y)-Matrix an jedem Endpunkt einer Geraden festgelegt. Die Kurven werden durch die (x,y)-Koordinaten von drei Punkten definiert, die durch die Bezier-Gleichung festgelegt sind:

$$P(t) = (1\text{-}t)^2 A + 2t(1\text{-}t)B + t^2 C\,,$$

welche eine Kurve P als Funktion von t definiert, wobei A, B, C die drei Punkte sind, die als Bezier-Daten für die Kurve P(t) verwendet werden. Die Implementierung der Bezier-Funktionen wird detaillierter in EP-A-0 574 225 beschrieben, deren Inhalt durch Verweis hierein aufgenommen wird.

Um die komplizierten Berandungen 50,51 der Rahmen zu drucken, werden im ROM gespeicherte Funktionen aufgerufen, die Geradenzeichenfunktionen und Kurvenzeichenfunktionen mit den jeweiligen Start- und Endpunkten, und bei Kurven mit dem Radius als Parameter verwenden. Solch eine Funktion könnte zum Beispiel so aussehen:

Funktion ZeichneRahmenStill (Skalierung)

ZeichneGerade (x1,y1,x2,y2,Skalierung);
ZeichneKurve (x2,y2,x3,y3,x4,y4,Skalierung);
...
Ende;
wobei x1, y1, x2, y2, x3, y3, x4 und y4 feste Parameter, dh. Zahlen, sind. Der Skalierungsfaktor ist variabel und berücksichtigt die verschiedenen verfügbaren Breiten des Bandes. Für ein breiteres Band werden die Rahmen entsprechend größer (höher) als für schmaleres Band gedruckt. Die zur Festlegung des Skalierungsfaktors notwendige Bandbreite kann vom Benutzer eingegeben oder automatisch detektiert sein. Das Unterprogramm (Unter-Funktion) ZeichneGerade gibt eine Information, welches Druckelement des Druckkopfs auf der jeweiligen Gerade liegt, dh. den Schnittpunkt I zwischen der den Umriß der Berandung 50,51 definierenden Linie und der Druckkopfreihe. Entsprechend gibt das Unterprogramm (Unterfunktion) ZeichneKurve eine Information, welches Druckelement des Druckkopfs auf der Kurve liegt, dh. den Schnittpunkt I zwischen der Kurve und der Druckkopfreihe. Es kann dabei mehr als einen Schnittpunkt mit der Druckkopfreihe geben, insbesondere wenn vertikale Linien zu drucken sind. Diese Information wird benutzt, um festzustellen, welche Elemente (Pixel) des Druckkopfs 42 zu aktivieren sind; es sind die Pixel zwischen zwei zusammengehörenden Schnittpunkten I. Sie werden aktiviert, während die verbleibenden Pixel nicht aktiviert werden.

Die oben genannten Funktionen werden für jede Position des Druckkopfs entlang der Länge des Bandes 14 (natürlich nur für den Teil der Länge des Bandes 14, auf dem eine komplizierte Berandung zu drucken ist) aufgerufen und stellen die Schnittpunkte I zwischen den Geraden und Kurven und der jeweiligen Druckkopfreihe während der Bewegung des Bandes 14 relativ zum Druckkopf 42 fest.

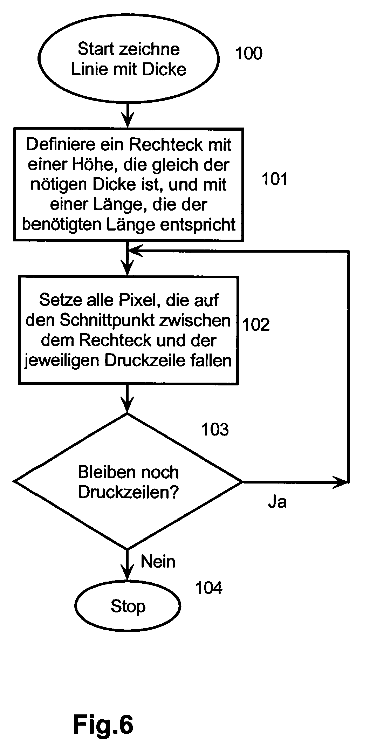

Diese Schnittpunkte I können zur Änderung der Dicke der den Rahmen definierenden Linien angepaßt werden. Das heißt, daß eine vom Benutzer eingegebene, gewünschte, oder automatisch festgelegte Dicke erreicht wird durch eine Verringerung oder Vergrößerung der Anzahl der einem Rahmen entsprechenden Pixel. Die Schnittpunkte werden entsprechend der Dicke der Linien des Rahmens nach oben oder unten verschoben. Hier wird auf Figur 6 verwiesen, in der die Druckoperationen für Linien mit unterschiedlicher Dicke gezeigt ist.

Es ist alternativ möglich, für die verschiedenen Dikken unterschiedliche Funktionen zu benutzen. Das bedeutet, daß die festen Parameter der Funktionen entsprechend der möglichen Dicke der Rahmen angepaßt werden.

In einer anderen Ausführungsform der Erfindung werden der gewünschten Dicke proportionale Beträge zu den in den Funktionen zum Drucken der komplizierten Berandungen des Rahmens benutzten Parametern hinzugezählt oder davon abgezogen. Eine derartige Funktion könnte wie folgt aussehen:

Funktion ZeichneRahmenStil2 (Skalierung,Dicke)

ZeichneGerade (x1+Dicke,y1,x2,y2-Dicke,Skalierung);
ZeichneKurve (x2,y2-Dicke,x3,y3,x4,y4-Dicke,Skalierung);
...
Ende;

Das bedeutet, daß die die Geraden und Kurven definierenden Punkte (die die Umrisse der komplizierten Teile des Rahmens wiedergeben) entsprechend der gewünschten Dicke des Rahmens verschoben werden.

Es ist anzumerken, daß in vielen Fällen die linke Berandung 50 und die rechte Berandung 51 des Rahmens symmetrisch sind. Zum Beispiel ist dies in Figur 4 nur bei dem dritten und drittletzten Rahmen nicht der Fall, während alle anderen Rahmen symmetrisch sind. Entsprechend kann die rechte Berandung 51 des Rahmens in vielen Fällen einfach durch Spiegelung des linken Teils des Rahmens erzeugt werden. Die entsprechende Funktion hätte dann einen weiteren Parameter:

Funktion ZeichneRahmenStil3 (Skalierung,Dicke,Gespiegelt)

...
Ende;
wobei „Gespiegelt" für ein Flag (Boolesche Variable) steht, die darüber informiert, ob die komplizierten Berandungen des Rahmens von links nach rechts oder von rechts nach links (gespiegelt) herzustellen sind.

Dieselbe Technik kann verwendet werden, um die Berandungen 50,51 auf der Anzeige 8 des Druckgeräts 1 anzuzeigen. Wenn der Drucker ein Menü zur Auswahl der unterschiedlichen Rahmentypen verwendet, können Bitmaps verwendet werden, um eine vereinfachte Darstellung des Rahmens auf der Anzeige 8 zu erzielen.

Es ist anzumerken, daß eine Druckzeile, nachdem sie vollständig erzeugt (dh. berechnet) wurde, im Druckpuffer des Druckers abgespeichert und anschließend mittels des Druckkopfs 42 auf das Band 14 aufgedruckt wird. Die Zeitsteuerung der Aktivierung der Elemente des Druckkopfs 42 kann mittels eines Kodierers auf der Achse des Motors 31 gesteuert werden, wenn es ein Gleichstrommotor ist. Wenn ein Schrittmotor verwendet wird, wird die schrittweise Aktivierung des Motors und die Synchronisation mit der Aktivierung der Elemente des Druckkopfs 42 durch den Mikroprozessor 44 gesteuert. Wenn die Druckoperation für eine Zeile beendet ist, wird die nächste Zeile gedruckt.

Im folgenden wird auf Figur 6 verwiesen, in der der Betrieb des Druckers gezeigt ist, wenn Linien mit variable Dicke gedruckt werden. Solche Linien können für Rahmen (insbesondere Rahmen mit komplizierter Form) und Unterstreichungen benutzt werden. Im ersten Schritt 100 wird die entsprechende Prozedur „Zeichne Linie mit Dicke" gestartet. Anschließend wird in Schritt 101 ein Rechteck definiert mit einer Höhe entsprechend der benötigten Dicke und mit einer Länge entsprechend der benötigten Linienlänge. Das heißt, daß im Speicher des Druckers eine Information über die Position und Größe (dh. Dicke und Länge) der Linie abgelegt wird. Es ist anzumerken, daß mehr als eine Linie gleichzeitig gedruckt werden kann, beispielsweise, wenn ein mehrzeiliger Text mit Unterstreichung gedruckt wird. In diesem Fall muß die Information über die Dicke und Lage aller Linien des Etiketts abgespeichert werden. Anschließend werden in Schritt 102 die Punkte, die auf Schnittpunkte zwischen den gespeicherten Rechtecken und der jeweiligen Druckzeile fallen, festgestellt und entsprechend aktiviert. Dann wird in Schritt 103 untersucht, ob Druckzeilen verbleiben. Wenn dies der Fall ist, wird Schritt 102 ausgeführt für die nachfolgende Druckzeile. Anderenfalls endet die Prozedur mit Schritt 104. Anzumerken bleibt, daß die Prozedur in Figur 6 zusätzlich zum Prozeß des Schriftzeichenausdruckens durchgeführt wird, da sowohl Unterstreichungen und Schriftzeichen gleichzeitig ausgeführt werden können.

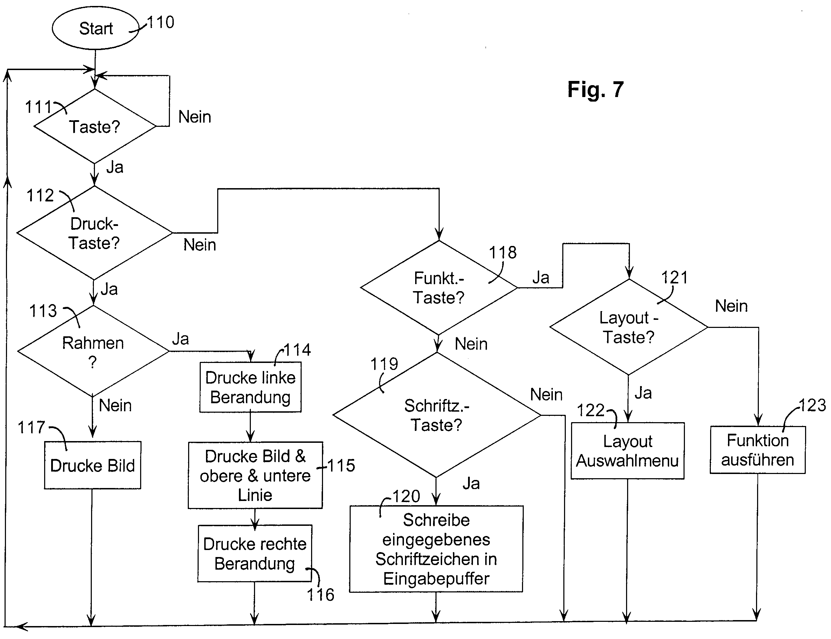

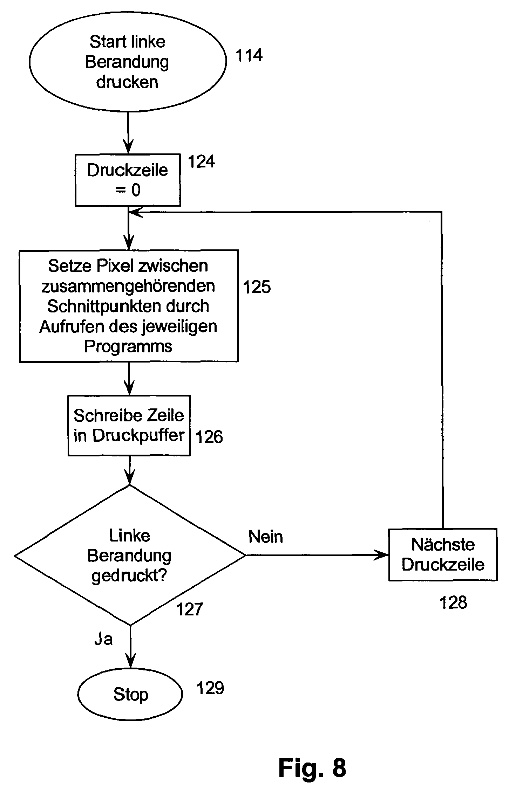

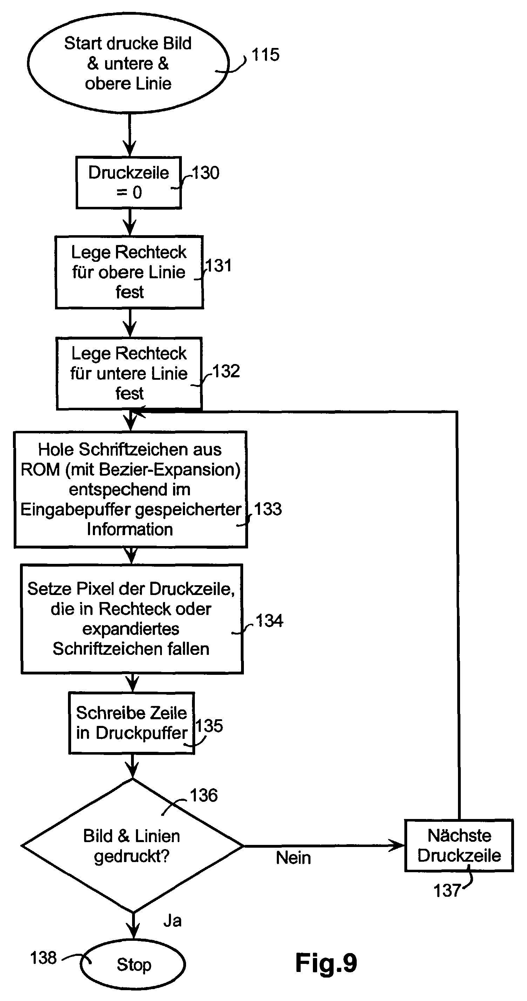

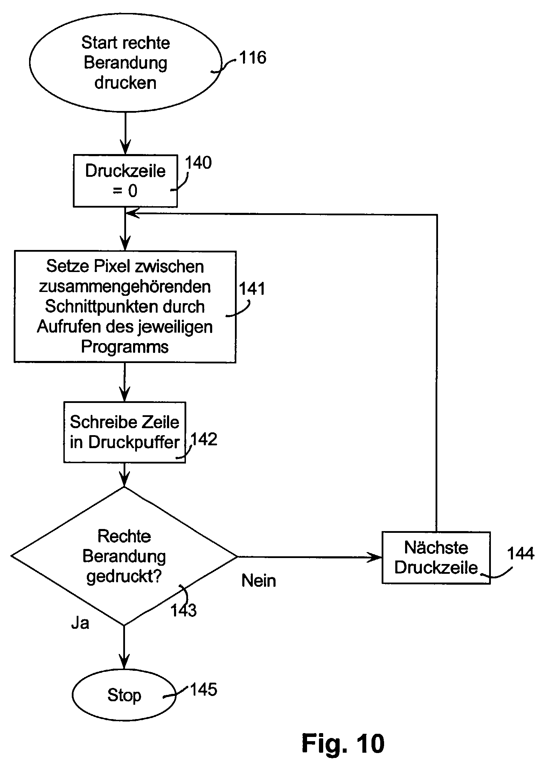

Figur 7 zeigt detaillierter, wie der Betrieb des Banddruckgeräts im Allgemeinen durchgeführt wird. Nach dem Start 110, das heißt, wenn die Stromversorgung eingeschaltet ist und der Mikroprozessor 44 das im ROM 41 gespeicherte Steuerprogramm geladen hat, untersucht das im Mikroprozessor 44 implementierte Steuerprogramm in Schritt 111, ob eine Taste 3,4 der Tastatur 2 gedrückt wurde. Wenn dies nicht der Fall ist, wird Schritt 111 wiederholt. Anderenfalls, wenn also eine Taste gedrückt ist, wird in Schritt 112 geprüft, ob die Druck-Taste 5 gedrückt ist. Wenn das wahr ist, beginnt der Druckvorgang. Somit wird in Schritt 113 untersucht, ob ein Rahmen zu drucken ist, oder nicht. Wenn kein Rahmen gedruckt wird, findet in Schritt 117 normales Drucken eines eingegebenen Bildes ohne jeden Rahmen statt, was an sich aus EP-A-0 577 225 bekannt ist, deren Inhalt durch Verweis hierin aufgenommen wird. Wenn ein Rahmen gedruckt wird, werden nacheinander drei Schritte ausgeführt: in Schritt 114 (s. Figur 8) wird die linke Berandung gedruckt; im folgenden Schritt 115 (s. Figur 9) wird das eingegebene Bild gemeinsam mit horizontalen Linien darüber und darunter gedruckt; und schließlich wird in Schritt 116 (s. Figur 10) die rechte Berandung des Rahmens gedruckt. Nach den Schritten 116 und 117 geht die Steuerung zurück zum Schritt 111. Wenn in Schritt 112 die Druck-Taste 5 nicht gedrückt ist, folgt Schritt 118, in dem eine Untersuchung ausgeführt wird, ob eine Funktionstaste 4 gedrückt ist. Wenn dies nicht der Fall ist, folgt Schritt 119, in dem untersucht wird, ob eine Schriftzeichentaste gedrückt wurde. Wenn dies wahr ist, wird das neu eingegebene Schriftzeichen in Schritt 120 in den Eingabepuffer geschrieben, wo es für Druckzwecke gespeichert wird. Außerdem wird das Schriftzeichen auf der Anzeige 8 wiedergegeben. Wenn in Schritt 119 keine Schriftzeichentaste gedrückt ist, folgt wieder Schritt 111, ohne daß weitere Aktionen durchgeführt werden (da dies nur in Fehlerfällen passieren kann, wenn beispielsweise zwei Tasten gleichzeitig gedrückt wurden, so daß der Mikroprozessor 44 nicht weiß, was er mit den eingegebenen Daten anfangen soll). Wenn in Schritt 118 keine Funktionstaste betätigt wurde, folgt Schritt 121, in dem untersucht wird, ob die betätigte Taste eine Layout-Menu-Auswahltaste ist, also eine besondere Funktionstaste 4 zum Aktivieren eines Menus zum Auswählen eines Layouts. Wenn dies wahr ist, folgt Schritt 122, in dem ein Menu zum Auswählen des Layouts aufgerufen wird. Schritt 122 wird später mit Bezug auf Figur 11 detaillierter beschrieben. Anderenfalls, wenn in Schritt 121 keine Layout-Menu-Taste gedrückt ist, folgt Schritt 123, in dem die der jeweiligen Taste zugeordnete Funktion ausgeführt wird. Schließlich folgt wieder Schritt 111.

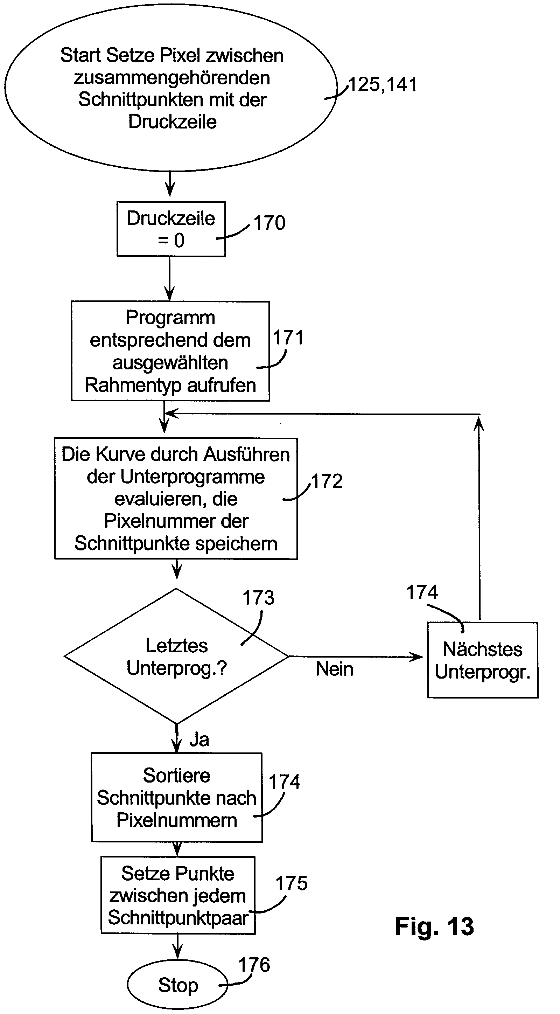

Figur 8 zeigt detaillierter, wie der Schritt 114 durchgeführt wird, dh. linke Berandungen von Rahmen gedruckt werden. In einem ersten Schritt 124 wird die aktuelle Druckzeile auf Null gesetzt. Dann werden in Schritt 125 die Pixel (den Druckkopfelementen entsprechende Daten) zwischen den jeweils zwei zusammengehörenden Schnittpunkten mit der Druckzeile gesetzt, wie in Bezug zur Figur 5 beschrieben. Das wird durch Abrufen der jeweiligen Programme für gerade Linien und Kurven aus dem ROM 41 durchgeführt; eine detailliertere Beschreibung von Schritt 125 wird bezüglich der Figur 13 gegeben. Im nachfolgenden Schritt 126 wird die Zeile im Druckpuffer gespeichert, um sie später zu den Druckkopfelementen zu senden, und im nachfolgenden Schritt 127 folgt eine Untersuchung, ob alle Daten für die linke Berandung vollständig hergestellt sind. Wenn das nicht der Fall ist, wird in Schritt 128 die nächste Druckzeile genommen, und Schritt 125 mit dieser Zeile wiederholt. Wenn Schritt 127 ergibt, daß die gesamte linke Berandung gedruckt ist, endet die Prozedur in Schritt 129.

Figur 9 gibt wieder, wie der mittlere Teil der gerahmten Bilder in Schritt 125 gedruckt wird. In einem ersten Schritt 130 wird die jeweilige Druckzeile auf Null gesetzt. Dann wird in Schritt 130 ein die obere Linie definierendes Rechteck definiert, wie bereits mit Bezug zur Figur 6 beschrieben. Dasselbe wird mit einem die untere Linie definierenden Rechteck in Schritt 132 durchgeführt. Weiterhin wird in Schritt 133 das an der jeweiligen Druckzeile zu druckende Schriftzeichen (oder die Schriftzeichen in einem Mehr-Zeilen-Modus) entsprechend der im Eingabepuffer abgespeicherten Information aus dem ROM ausgelesen, wobei Bezier-Expansions-Routinen verwendet werden, wie sie in der EP-A-0 574 225 beschrieben sind, deren Inhalt durch Verweis hierin aufgenommen wird. Anschließend werden in Schritt 134 die Pixel der Druckzeile, die in die Rechtecke oder die expandierten Schriftzeichen fallen, gesetzt und dann in Schritt 135 im Druckpuffer abgespeichert. Im Schritt 136 folgt eine Abfrage, ob das Bild und die geraden Linien vollständig gedruckt sind, und wenn das nicht wahr ist, folgt Schritt 137, in dem die nächste Druckzeile genommen wird, worauf Schritt 133 wieder folgt. Wenn Schritt 136 ergibt, daß der gesamte Mittelteil zum Drucken gespeichert ist, endet die Prozedur in Schritt 138.

Figur 10 zeigt detaillierter, wie Schritt 116 durchgeführt wird, dh. rechte Berandungen gedruckt werden. In einem ersten Schritt 140 wird die jeweilige aktuelle Druckzeile auf Null gesetzt. Dann werden in Schritt 141 die Pixel zwischen jeweils zwei zusammengehörenden Schnittpunkten mit der Druckzeile gesetzt, wie in Bezug zur Figur 5 beschrieben. Das wird durchgeführt durch Aufrufen der jeweiligen Programme für gerade Linien und Kurven aus dem ROM 41. Im folgenden Schritt 142 wird die Druckzeile zum Drucken im Druckpuffer abgespeichert, und im folgenden Schritt 143 folgt eine Untersuchung, ob die rechte Berandung vollständig gedruckt ist. Wenn dies nicht der Fall ist, wird in Schritt 144 die nächste Zeile genommen, und Schritt 141 wird mit der nächsten Druckzeile ausgeführt. Wenn Schritt 143 ergibt, daß die gesamte rechte Berandung gedruckt ist, endet die Prozedur in Schritt 145. Wenn die linke und rechte Berandung des Rahmens symmetrisch sind, kann Schritt 116 dieselben Funktionen wie Schritt 114 benutzten, nur mit invertierten horizontalen Parametern, wie bereits beschrieben.

Es ist anzumerken, daß im Mikroprozessor ein separater Prozeß läuft, der den Druckkopf 42 entsprechend der Daten im Druckpuffer und der Bewegung des Bandes 14 steuert. Letzteres kann durch eine Überwachung des Motors 31 mittels eines Kodierers auf seiner Achse durchgeführt werden, wie in EP-A-0 741 044 beschrieben. Alternativ kann ein Schrittmotor benutzt werden, so daß die Daten für jede Zeile unmittelbar gedruckt werden können, nachdem sie berechnet wurden.

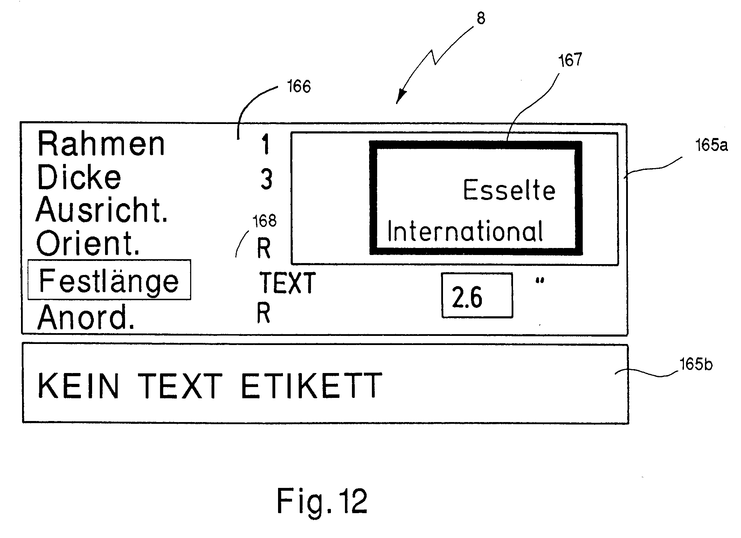

Figur 11 zeigt Schritt 122, das Layout-Menu, detaillierter. In einem ersten Schritt 150 werden die verfügbaren Rahmentypen, Rahmendicken, und anderen Optionen auf der Anzeige 8 wiedergegeben; ein Beispiel wird in Figur 12 gegeben. Die Optionen können Ausrichtung oder Orientierung des Bildes (Texts) des Etiketts umfassen. Der Benutzer hat in diesem Menu die Möglichkeit, den Rahmentypen, die Rahmendicke und andere Optionen auszuwählen. Das wird mittels der Tastatur 2 durchgeführt. Somit wird im auf den Schritt 150 folgenden Schritt 151 untersucht, ob eine Taste 3 gedrückt ist. Wenn dies falsch ist, folgt wieder Schritt 150, wobei die Anzeige weiterhin dasselbe Bild wiedergibt. Anderenfalls wird Schritt 152 ausgeführt, der untersucht, ob die Auswahl-Taste 7 gedrückt wurde. Wenn dieses wahr ist, wird Schritt 153 ausgeührt, in dem gefragt wird, ob der Cursor 168 (s. Figur 12) gegenwärtig unter einem Feld auf der Anzeige 8 steht, das den Rahmentyp repräsentiert. Wenn das wahr ist, wird in Schritt 154 ein anderer Rahmentyp genommen; dieser Typ wird dann im folgenden Schritt 150 auf der Anzeige 8 wiedergegeben, in dem ein anderes Bild gezeigt wird. Mit anderen Worten kann die Auswahl-Taste 7 zum Durchlaufen durch die möglichen unterschiedlichen Rahmentypen verwendet werden, wobei nur ein Rahmen zur Zeit wiedergegeben wird, wenn der Cursor im Rahmentypenfeld steht. Es ist anzumerken, daß einer der Rahmentypen beinhaltet, daß überhaupt kein Rahmen gedruckt wird. Die Rahmentypen können die der Figur 4 sein. Wenn in Schritt 153 der Cursor nicht in dem die Rahmentypen repräsentierenden Feld steht, wird Schritt 155 ausgeführt, der untersucht, ob der Cursor gegenwärtig in einem die Rahmendicke repräsentierenden Feld steht. Wenn dies wahr ist, folgt Schritt 156, der im bewirkt, daß im folgenden Schritt 150 eine andere Rahmendickendarstellung zur Anzeige 8 gesandt wird. Somit kann die Auswahl-Taste 7 benutzt werden, um durch die möglichen Rahmendicken durchzulaufen, wenn der Cursor sich im Rahmendickenfeld befindet. Eine der verfügbaren Rahmendicken kann ein Automatikmodus sein, in dem die Rahmendicke selbsttätig entsprechend der Bandbreite oder der Schriftzeichengröße ausgewählt wird. Wenn der Cursor in Schritt 155 nicht in dem die Dicke repräsentierenden Feld angeordnet ist, wird Schritt 157 ausgeführt. In diesem Schritt wird die mit der gegenwärtigen Position des Cursors assoziierte Option auf der Anzeige verändert. Wenn der Cursor beispielsweise im Ausrichtungs-Feld ist, kann eine andere Ausrichtung (links, mitte, rechts, blocksatz) auf der Anzeige 8 im Schritt 150, der dem Schritt 157 folgt, wiedergegeben werden. Wenn in Schritt 152 keine Auswahl-Taste gedrückt war, folgt Schritt 160. In diesem Schritt wird untersucht, ob eine Cursor-Taste 11 gedrückt wurde. Wenn dies wahr ist, wird in Schritt 161 der Cursor auf der Anzeige in eine neue Position gebracht. Schritt 150 folgt Schritt 161, wobei der Cursor nunmehr mit einer anderen Option assoziiert ist, so daß der Benutzer mittels der Auswahl-Taste 7 durch die mit dieser neuen Option verbundenen Auswahlmöglichkeiten durchlaufen kann. Wenn in Schritt 160 keine Cursor-Taste 11 betätigt wurde, wird Schritt 162 ausgeführt. Dieser Schritt fragt ab, ob die Return-Taste 13 gedrückt wurde. Wenn dies der Fall ist, wird im folgenden Schritt 163 der gewünschte Rahmentyp, die ausgewählte Rahmendicke, und die gewählten übrigen Optionen im Eingabepuffer gespeichert und diese Prozedur endet mit Schritt 164. Wenn in Schritt 162 nicht die Return-Taste 13, sondern zum Beispiel eine Escape-Taste betätigt wurde, endet die Prozedur auch in Schritt 164, jedoch ohne abspeichern, so daß die vorigen Optionen gültig bleiben.

Figur 12 zeigt die Anzeige 8 des Banddruckgeräts 1, wenn sie im Layout-Menu steht. Die Anzeige 8 ist in zwei Teile 165a und 165b unterteilt. Der erste Teil 165a der Anzeige 8 zeigt die Parameter und der zweite Teil 165b der Anzeige 8 zeigt die für einen bestimmten, durch den Cursor 168 hervorgehobenen Parameter verfügbaren Optionen an. In Figur 12 ist zum Beispiel der Festlängen-Parameter hervorgehoben. Die verschiedenen für den Festlängen-Parameter verfügbaren Optionen werden im unteren Teil der Anzeige 8 wiedergegeben. Ein anderer Wert für den Festlängen-Parameter kann durch hinreichend häufiges Aktivieren der Auswahl-Taste 7 ausgewählt werden. Wenn beispielsweise der Festlängen-Parameter den Wert KEIN haben soll, würde die Auswahl-Taste 7 zweimal gedrückt werden müssen, da der gegenwärtig ausgewählte Wert für diesen Parameter der TEXT-Wert ist, wie in Figur 12 erkennbar ist. Der TEXT-Wert bedeutet, daß die Länge des Texts des Etiketts so ausgewählt wird, daß er eine maximale, vom Benutzer gewählte Länge hat. Der ETIKETT-Wert bedeutet, daß die Länge des Etiketts als solches derart ausgewählt wird, daß es eine festgelegte, vom Benutzer eingegebene Länge hat. Die jeweilige vom Benutzer eingegebene Länge kann durch die Cursor-Tasten 11 ausgewählt werden, um einen Wert in einer Eingabebox zu ändern, die erscheint, wenn die TEXT oder ETIKETT-Werte ausgewählt werden. Die vom Benutzer gewählte Länge kann durch die Verwendung von Aufwärts- und Abwärts-Cursor-Tasten ausgewählt werden, um den Längenwert herauf- oder herunterzusetzen. Alternativ kann die vom Benutzer gewählte Länge durch Verwendung der Ziffern-Tasten ausgewählt werden. Der dritte Wert KEIN gilt, wenn das Etikett und der Text irgendeine, vom eingegebenen Bild abhängige Länge haben können. Um den Wert eines anderen Parameters zu ändern, werden die Cursor-Tasten 11 benutzt, so daß der Parameter (Option), dessen Änderung beabsichtigt ist, hervorgehoben wird. Wenn beispielsweise die Dicke des Rahmens zu ändern wäre, müßte der Aufwärts-Cursor dreimal aktiviert werden, um mit dem Cursor 168 den Dicken-Parameter hervorzuheben. Die verfügbaren Werte oder Optionen für den Dicken-Parameter würden dann im unteren Teil 165b der Anzeige 8 angezeigt. Der Rahmen-Parameter 166 repräsentiert den ausgewählten Rahmentyp. Er wird durch eine Ordnungsnummer angezeigt und in einem Beispielsetikett 167 an der rechten Seite des oberen Teils 165a der Anzeige 8 repräsentiert. Wenn ein anderer Rahmentyp ausgewählt wird, wird der Rahmen des Beispieletiketts 167 entsprechend geändert. Die verbleibenden Parameter (Ausrichtung, Orientierung, Anordnung) werden in unserer gleichfalls anhängigen Anmeldung GB 9614142.9 beschrieben.

Figur 13 zeigt die Schritte 125 und 141 detaillierter. Diese Schritte sind zum Setzen der richtigen Pixel der Druckzeile des Druckkopfs, wenn komplizierte Berandungen von Rahmen gedruckt werden. Im Schritt 170, der Schritt 125 (oder 141) folgt, werden alle Pixel auf Null gesetzt. Anschließend wird in Schritt 171 das im ROM 141 gespeicherte, dem ausgewählten Rahmen zugeordnete Programm aufgerufen. Dieses Programm besteht aus verschiedenen Unterfunktionen, wie in Bezug zur Figur 5 beschrieben. Entsprechend wird in Schritt 172 die von der Unterfunktion repräsentierte Kurve durch Ausführen der Unterfunktion evaluiert; das Ergebnis der Subfunktion ist oder sind die Pixelnummer(n) jedes Schnittpunktes der Kurve mit der Druckzeile. Diese Pixelnummer wird gespeichert. Auf Schritt 172 folgt Schritt 173, und untersucht, ob bereits die letzte Unterfunktion des jeweiligen Programms aufgerufen wurde. Wenn dies falsch ist, folgt Schritt 174, in dem die nächste Unterfunktion aufgerufen wird; diesem Schritt folgt wieder Schritt 172. Andererseits, wenn Schritt 173 ergibt, daß die letzte Unterfunktion ausgeführt wurde, sind alle Schnittpunkte mit der aktuellen Druckzeile abgespeichert. Das Ergebnis kann zum Beispiel die Pixel 4, 50, 12 und 23 sein. Dann wird Schritt 174 durchgeführt, in dem die Schnittpunkte nach ihrer Ordnungsnummer sortiert werden, so daß das Ergebnis in diesem Beispiel die Pixel 4, 12, 23 und 50 sind. Im sich anschließenden Schritt 175 werden die Pixel zwischen jedem Paar von Schnittpunkten (im Beispiel die Pixel zwischen 4 und 12 und die zwischen 23 und 50) auf Eins gesetzt. Der Prozeß endet in Schritt 176.

## Patentansprüche

1. Druckgerät (1) zum Bedrucken eines Bandes (14), mit

Mitteln zum Eingeben von auszudruckenden Schriftzeichen in einen Puffer (43),
Mitteln (4) zum Auswählen eines Typs eines Rahmens, der um wenigstens einen Teil der Schriftzeichen herum ausdruckbar ist, wobei die unterschiedlichen Typen der Rahmen verschiedene Formen aufweisen,
einer Druckeinrichtung zum Bedrucken des Bandes (14) mit den Schriftzeichen und mit einem ausgewählten Rahmen, und
einer Steuerungseinrichtung (44) zum Steuern der Druckeinrichtung, **dadurch gekennzeichnet**, daß das Druckgerät einen Programmspeicher (41) aufweist, in dem Programme abgespeichert sind, daß die Steuerungseinrichtung (44) zum Abrufen von Programmen aus dem Programmspeicher (41) eingerichtet ist, daß die Steuerungseinrichtung (44) durch die Programme zur Bereitstellung von Daten zur Steuerung der Druckeinrichtung zum Drukken zumindest von Teilen der Rahmen steuerbar ist, und daß die Steuerungseinrichtung (44) entsprechend dem jeweils ausgewählten Rahmen unterschiedliche Programme aus dem Programmspeicher (41) aufruft.

2. Druckgerät nach Anspruch 1, **dadurch gekennzeichnet**, daß die Steuerungseinrichtung (44) die Programme aus dem Programmspeicher (41) aufruft, um festzustellen, welche Druckelemente eines Druckkopfs (42) während eines jeweiligen Druckzyklus zu aktivieren sind.

3. Druckgerät nach Anspruch 1 oder 2, **dadurch gekennzeichnet**, daß zumindest ein Teil der Rahmen linke Berandungen (50) und rechte Berandungen (51) umfaßt, deren Umrisse aus geraden Abschnitten (53) und/oder kurvenförmigen Abschnitten (54) zusammengesetzt sind.

4. Druckgerät nach Anspruch 3, **dadurch gekennzeichnet**, daß die Steuerungseinrichtung (44) zum Drucken der Berandungen durch Aufrufen von Programmen aus dem Programmspeicher (41) Daten erzeugt, die Schnittpunkten zwischen den geraden Abschnitten (50) und/oder kurvenförmigen Abschnitten (54) der Umrisse des Rahmens und der jeweiligen Druckkopfzeile entsprechen.

5. Druckgerät nach einem der Ansprüche 1 bis 4, **dadurch gekennzeichnet**, daß die Steuerungseinrichtung (44) in Abhängigkeit vom ausgewählten Typ des Rahmens unterschiedliche Programme aus dem Programmspeicher (41) abruft, die die Steuerungseinrichtung (44) veranlassen, Unterprogramme zu aktivieren, die sukzessive mit unterschiedlichen Parametern aufgerufen werden.

**6.** Druckgerät nach Anspruch 5, **dadurch gekennzeichnet**, daß die Unterprogramme Daten zum Drucken von geraden Linien und Kurven bereitstellen, wobei Unterprogramme zum Drucken gerader Linien mit Parametern aufgerufen werden, die die Anfangs- und Endpunkte der jeweiligen Linie repräsentieren, und Unterprogramme zum Drucken gekrümmter Linien mit Parametern aufgerufen werden, die die Anfangs- und Endpunkte der jeweiligen Kurve und einen Offset, der die Krümmung der jeweiligen Kurve definiert, repräsentieren.

**7.** Druckgerät nach einem der Ansprüche 1 bis 6, **dadurch gekennzeichnet**, daß die Steuerungseinrichtung (44) die Höhe der Rahmen selbsttätig entsprechend der jeweiligen Breite des Bandes (14) auswählt, wobei die Breite des Bandes (14) eingebbar ist oder selbsttätig detektiert wird.

**8.** Druckgerät nach einem der Ansprüche 1 bis 7, **dadurch gekennzeichnet**, daß die Dicke des Rahmens auf einen eingebbaren oder selbsttätig festgelegten Wert variierbar ist.

**9.** Druckgerät nach Anspruch 8, **dadurch gekennzeichnet**, daß der selbsttätig festgelegte Wert für die Dicke des Rahmens von der Breite des Bandes (14) abhängt.

**10.** Druckgerät nach Anspruch 8 oder 9, **dadurch gekennzeichnet**, daß die Steuerungseinrichtung (44) die Dicke des Rahmens durch Verschiebung der Schnittpunkte zwischen den geraden Abschnitten (50) und/oder kurvenförmigen Abschnitten (54) der Umrisse des Rahmens und der jeweiligen Druckkopfzeile entsprechend der Dicke des Rahmens steuert.

**11.** Druckgerät nach Anspruch 10, **dadurch gekennzeichnet**, daß die Steuerungseinrichtung (44) in Abhängigkeit von der Dicke des Rahmens unterschiedliche Programme aus dem Programmspeicher (41) aufruft.

**11.** Druckgerät nach Anspruch 10, **dadurch gekennzeichnet**, daß die Steuerungseinrichtung (44) Programme aus dem Programmspeicher (41) mit einem von der Dicke des Rahmens abhängigen Parameter aufruft.

**12.** Druckgerät nach einem der Ansprüche 1 bis 11, **dadurch gekennzeichnet**, daß die Steuerungseinrichtung (44) ein und dasselbe Programm zum Drucken zweier symmetrischer Teile eines Rahmens aus dem Programmspeicher (41) aufruft.

Fig. 1

Fig. 2

Fig. 3

Fig. 4

Fig. 5

```
         ╭─────────────╮
        ╱  Start zeichne ╲      100
       (  Linie mit Dicke  )
        ╲               ╱
         ╰──────┬──────╯
                │
                ▼
    ┌───────────────────────┐
    │ Definiere ein Rechteck mit │
    │ einer Höhe, die gleich der │   101
    │ nötigen Dicke ist, und mit │
    │    einer Länge, die der   │
    │ benötigten Länge entspricht │
    └───────────┬───────────┘
                │
                ▼
    ┌───────────────────────┐
    │  Setze alle Pixel, die auf │
    │ den Schnittpunkt zwischen │  102
    │    dem Rechteck und der   │
    │ jeweiligen Druckzeile fallen │
    └───────────┬───────────┘
                │
                ▼        103
              ╱  ╲
            ╱      ╲
          ╱ Bleiben noch ╲        Ja
         ⟨  Druckzeilen?  ⟩──────────►
          ╲             ╱
            ╲         ╱
              ╲     ╱
                │ Nein
                ▼           104
         ╭─────────────╮
        (     Stop     )
         ╰─────────────╯
```

# Fig.6

**Fig. 7**

Start linke
Berandung
drucken

114

Druckzeile
= 0

124

Setze Pixel zwischen
zusammengehörenden
Schnittpunkten durch
Aufrufen des jeweiligen
Programms

125

Schreibe Zeile
in Druckpuffer

126

Linke
Berandung
gedruckt?

127

Nein → Nächste
Druckzeile

128

Ja

Stop

129

**Fig. 8**

Start drucke Bild
& untere &
obere Linie — 115

Druckzeile
= 0 — 130

Lege Rechteck
für obere Linie
fest — 131

Lege Rechteck
für untere Linie
fest — 132

Hole Schriftzeichen aus
ROM (mit Bezier-Expansion)
entspechend im
Eingabepuffer gespeicherter — 133
Information

Setze Pixel der Druckzeile,
die in Rechteck oder
expandiertes
Schriftzeichen fallen — 134

Schreibe Zeile
in Druckpuffer — 135

136

Bild & Linien
gedruckt? — Nein → Nächste Druckzeile — 137

Ja

138 — Stop

**Fig.9**

19

Start rechte
Berandung
drucken — 116

Druckzeile
= 0 — 140

Setze Pixel zwischen
zusammengehörenden
Schnittpunkten durch
Aufrufen des jeweiligen
Programms — 141

Schreibe Zeile
in Druckpuffer — 142

Rechte
Berandung
gedruckt? — 143

Nein → Nächste
Druckzeile — 144

Ja

Stop — 145

**Fig. 10**

Start
Layout-Menu ⌐122

Zeige ausgewählten
Ramentyp, Dicke
und Optionen ⌐150

Nächsten
Rahmentyp ⌐154

Nächste
Dicke
156

157

Ändere die zur
Cursorposition
gehörende Option

Taste
gedrückt? ⌐151    Nein

Ja

152⌐

Ja

Auswahl-
Taste?

Ja

153

Cursor auf
Rahmen?

Nein

155⌐

Cursor auf
Dicke?

Ja

Nein

Nein

160⌐

Cursor-
Taste?

Ja

Setze Cursor
auf neue
Position ⌐161

Nein

162⌐

Return-
Taste?

Ja

Speichere Rahmentyp,
Dicke und Optionen ⌐163

Nein

164⌐

Stop

**Fig. 11**

EP 0 821 314 A2

Rahmen 1
Dicke 3
Ausricht. 168
Orient. R
Festlänge TEXT
Anord. R

Esselte
International

2.6 "

165a

167

166

168

8

165b

KEIN TEXT ETIKETT

Fig.12

Start Setze Pixel zwischen zusammengehörenden Schnittpunkten mit der Druckzeile 125,141

Druckzeile = 0 170

Programm entsprechend dem ausgewählten Rahmentyp aufrufen 171

Die Kurve durch Ausführen der Unterprogramme evaluieren, die Pixelnummer der Schnittpunkte speichern 172

173 Letztes Unterprog.?

174 Nächstes Unterprogr.

Nein

Ja

Sortiere Schnittpunkte nach Pixelnummern 174

Setze Punkte zwischen jedem Schnittpunktpaar 175

176 Stop

**Fig. 13**